# FASCICULE DE BREVET EUROPEEN

(11) **EP 2 678 543 B1**
(45) Date de publication et mention de la délivrance du brevet: **08.04.2015**
(21) Numéro de dépôt: 12709936.4
(22) Date de dépôt: 17.02.2012
(51) Int. Cl.: F02C 7/32, F02K 3/06, F02C 7/36

(54) **ARBRE D'ENTRAINEMENT DE BOITIER A ENGRENAGES DE MACHINES AUXILIAIRES D'UN TURBOREACTEUR**
ANTRIEBSWELLE FÜR DAS GETRIEBE VON HILFSMASCHINEN EINES TRIEBWERKS
DRIVESHAFT FOR THE GEARBOX OF AUXILIARY MACHINES OF A TURBOJET ENGINE

(30) Priorité: 21.02.2011 FR 1151381
(43) Date de publication de la demande: 01.01.2014
(73) Titulaire: Snecma Société Anonyme, 75015 Paris (FR)
(72) Inventeur: BRAULT, Michel, Gilbert, Roland, F-91480 Quincy sous Senart (FR); SERVANT, Régis, Eugène, Henri, F-91270 Vigneux sur Seine (FR)
(74) Mandataire: Gevers France
(86) Numéro de dépôt international: PCT/FR2012/050354
(87) Numéro de publication internationale: WO 2012/114029

(56) Documents cités:
- EP-A1- 2 101 052
- EP-A2- 1 908 941
- EP-A2- 1 939 429
- JP-A- 2001 317 374
- JP-A- 2003 269 191

## Description

La présente invention concerne le domaine des turboréacteurs d'aéronef multicorps et multiflux. Elle vise une configuration spécifique d'un arbre d'entraînement dans un bras radial d'un carter intermédiaire d'un tel turboréacteur.

Pour l'entraînement des machines auxiliaires montées sur le turboréacteur, telles que les générateurs électriques, les pompes à huile ou a carburant, nécessaires à son fonctionnement ou à celui de l'aéronef sur lequel il est monté, on prélève généralement la puissance requise sur l'arbre principal. Un turboréacteur à double corps comprend deux arbres coaxiaux, l'un, dit basse pression ou BP, reliant le compresseur basse pression à la turbine basse pression et formant ensemble le corps BP, l'autre, dit haute pression ou HP, reliant le compresseur haute pression à la turbine haute pression et formant ensemble le corps HP. Dans le cas d'un tel moteur, la transmission de puissance vers les auxiliaires est généralement assurée par un arbre radial, logé dans un bras du carter intermédiaire, dont une extrémité comporte un pignon conique coopérant avec un pignon solidaire du corps haute pression. L'autre extrémité est reliée mécaniquement à un boîtier comprenant une pluralité d'engrenages et formant support des machines auxiliaires tout en assurant leur entraînement. Lorsque le moteur est à double flux, l'arbre de transmission radial ou arbre d'entraînement traverse les deux veines de flux primaire et de flux secondaire respectivement car le boîtier à engrenages d'entraînement des accessoires, dit aussi AGB pour « Accessory Gear Box », est monté sur le carter de la soufflante générant le flux secondaire.

Un arbre d'entraînement connu est formé de deux éléments appelés arbre primaire et arbre secondaire. Le premier élément d'arbre ou arbre primaire est relié à l'une de ses extrémités à un moyen de transmission mécanique avec un arbre moteur du turboréacteur. Le second élément d'arbre ou arbre secondaire est relié à l'une de ses extrémités à un moyen de transmission mécanique avec le boîtier à engrenages d'entraînement des accessoires. Un palier intermédiaire de support de l'arbre d'entraînement peut être aménagé dans une section du bras radial. Un tel palier intermédiaire comprend généralement une pluralité de roulements destinés à supporter l'arbre d'entraînement lorsque celui-ci est en rotation.

En fonctionnement, le bras radial du carter intermédiaire est soumis à des efforts aérodynamiques. Les déformations induites par ces efforts aérodynamiques sur le bras radial entraînent l'apparition d'un premier désalignement de l'arbre d'entraînement au niveau de la liaison du premier élément d'arbre et du second élément d'arbre et d'un second désalignement de l'arbre d'entraînement au niveau du palier intermédiaire. Ces désalignements apparaissent ainsi dans des zones différentes et produisent un balourd et des vibrations de l'arbre d'entraînement dans le bras radial, induisant notamment un moment au niveau des roulements du palier intermédiaire, ce qui réduit l'efficacité d'entraînement de l'arbre (voir par exemple le document EP 1908941).

La présente invention a pour but de remédier à ces inconvénients. Elle concerne un turboréacteur, notamment un turboréacteur multi-flux, comprenant un carter intermédiaire avec des bras radiaux et un arbre d'entraînement de boîtier à engrenages de machines auxiliaires du turboréacteur monté dans un bras radial du carter intermédiaire. Le bras radial du carter intermédiaire comprend un palier intermédiaire de support de l'arbre d'entraînement. Le palier intermédiaire comprend une pluralité de roulements de support de l'arbre d'entraînement. L'arbre d'entraînement comprend un premier élément d'arbre, relié à une extrémité à un moyen de transmission mécanique avec un arbre moteur du turboréacteur, et un second élément d'arbre, relié à une extrémité à un moyen de transmission mécanique avec le boîtier d'engrenages de machines auxiliaires. Le premier élément d'arbre et le second élément d'arbre sont liés par une liaison consistant en un emmanchement d'une extrémité du second élément d'arbre dans une extrémité cylindrique creuse du premier élément d'arbre et étant réalisée par une pluralité de cannelures complémentaires disposées sur le premier élément d'arbre et sur le second élément d'arbre. Le turboréacteur est remarquable par le fait qu'un même plan coupe transversalement la pluralité de cannelures et la pluralité de roulements. Ceci permet notamment de diminuer les contraintes dans le palier intermédiaire dues au désalignement des deux éléments d'arbre radial et de réduire les jeux, à la fois au niveau de la liaison et au niveau du palier intermédiaire, la liaison liant le premier élément d'arbre et le second élément d'arbre étant articulée dans une zone située au niveau des roulements du palier intermédiaire qui est la zone de support de l'arbre dans le bras radial. Ceci facilite aussi le rotulage du premier élément d'arbre et du second élément d'arbre sous l'effet de la déflection dans le bras radial du carter intermédiaire. Ainsi, le positionnement des roulements du palier intermédiaire par rapport aux cannelures de la liaison réduit le nombre de centrages entre les pièces, il y alors moins de désalignement entre le premier élément d'arbre et le second élément d'arbre.

Selon une caractéristique de l'invention, le premier élément d'arbre et le second élément d'arbre d'entraînement sont articulés autour d'un centre de rotulage et un même plan coupe transversalement ledit centre de rotulage et la pluralité de roulements. Ceci facilite davantage le rotulage du premier élément d'arbre et du second élément d'arbre sous l'effet de la déflection dans le bras radial du carter intermédiaire. Ceci permet de réduire le balourd et les vibrations de l'arbre d'entraînement étant donné que le centre de rotulage de l'arbre d'entraînement, situé au niveau de la liaison entre le premier élément d'arbre et le second élément d'arbre, et plus particulièrement au niveau des cannelures de la liaison, est ramené au niveau du palier intermédiaire, c'est-à-dire dans un plan de rotulage de l'arbre d'entraînement.

Avantageusement, un même plan coupe transversalement le centre de rotulage et le centre de chaque roulement de la pluralité de roulements. Ceci facilite davantage le rotulage du premier élément d'arbre et du second élément d'arbre sous l'effet de la déflection dans le bras radial du carter intermédiaire. Ceci permet de réduire davantage le balourd et les vibrations de l'arbre d'entraînement étant donné que le centre de rotulage de l'arbre d'entraînement, situé au niveau de la liaison entre le premier élément d'arbre et le second élément d'arbre, et plus particulièrement au niveau des cannelures de la liaison, est ramené au niveau d'un plan médian traversant les centres des roulements du palier intermédiaire, c'est-à-dire du plan médian de support de l'arbre d'entraînement par les roulements du palier intermédiaire.

Selon une caractéristique de l'invention, un même plan coupe transversalement le milieu de chaque cannelure de la pluralité de cannelures et le milieu de chaque roulement de la pluralité de roulements. Ceci permet de placer le centre de rotulage de la liaison, lorsque celui-ci se situe dans un plan transverse comprenant le milieu de chaque cannelure, dans le plan médian de support de l'arbre d'entraînement. Le mouvement de rotulage de la liaison a ainsi son origine dans le plan médian de support de l'arbre d'entraînement, ce qui permet de réduire davantage le balourd et les vibrations de l'arbre d'entraînement tout en augmentant l'amplitude du rotulage du premier élément d'arbre par rapport au second élément d'arbre vu que le centre de rotulage du premier élément d'arbre par rapport au second élément d'arbre se situe au niveau des cannelures.

Un rotulage souple de l'arbre d'entraînement peut en outre être obtenu en utilisant des cannelures bombées, augmentant ainsi l'amplitude du rotulage du premier élément d'arbre par rapport au second élément d'arbre, tout en diminuant, avec la configuration selon l'invention, le balourd et les vibrations.

Selon une autre caractéristique de l'invention, le premier élément d'arbre d'entraînement est logé dans un premier fourreau et le second élément d'arbre d'entraînement est logé dans un second fourreau.

Ceci évite à l'huile de lubrification du palier intermédiaire de remplir le bras du carter intermédiaire, et cela permet également de mettre en communication l'enceinte air/huile des paliers moteur avec celle du boîtier d'engrenages des machines auxiliaires.

Conformément un autre aspect de l'invention, le palier intermédiaire est logé dans un espace du bras radial formant séparation du flux primaire d'avec le flux secondaire.

Selon une caractéristique de l'invention, celui-ci comprend en outre un dispositif d'injection d'huile de lubrification agencé pour injecter de l'huile de lubrification au niveau d'un plan traversant transversalement la pluralité de cannelures et la pluralité de roulements. Ceci permet d'optimiser l'alimentation en huile, évitant ainsi que l'huile ne produise un balourd ou une masse qui déséquilibrerait l'arbre dans sa rotation, si elle était amenée, classiquement, par l'intermédiaire des arbres.

Selon une autre caractéristique de l'invention, le turboréacteur comprend en outre une piste extérieure du roulement de palier intermédiaire centrée dans le carter. Ceci améliore le positionnement de la ligne d'arbre en minimisant l'empilage des tolérances. Ceci permet aussi de fermer l'enceinte huile formée par le carter et participe à son étanchéité en comprimant le joint installé dans la gorge du carter. Ceci permet également le centrage et l'étanchéité du fourreau secondaire.

On décrit maintenant un mode de réalisation non limitatif de l'invention, en référence aux dessins annexés sur lesquels :
la figure 1 montre, en coupe axiale, une vue générale d'un turboréacteur à double flux et double corps sur lequel l'invention est susceptible de s'appliquer,
la figure 2 montre une vue arrière d'un turboréacteur comprenant un carter intermédiaire au droit de celui-ci;
la figure 3 représente schématiquement un bras radial du carter intermédiaire dans lequel est logé un arbre d'entraînement ;
la figure 4 illustre une vue en coupe d'un bras radial du carter intermédiaire dans lequel est logé un arbre d'entraînement d'un turboréacteur selon l'invention;
la figure 5 illustre une vue en coupe d'un palier intermédiaire d'un bras radial du carter intermédiaire dans lequel est logé un arbre d'entraînement d'un turboréacteur selon l'invention;
la figure 6 illustre schématiquement une vue en coupe d'un palier intermédiaire d'un bras radial du carter intermédiaire dans lequel est logé un arbre d'entraînement.

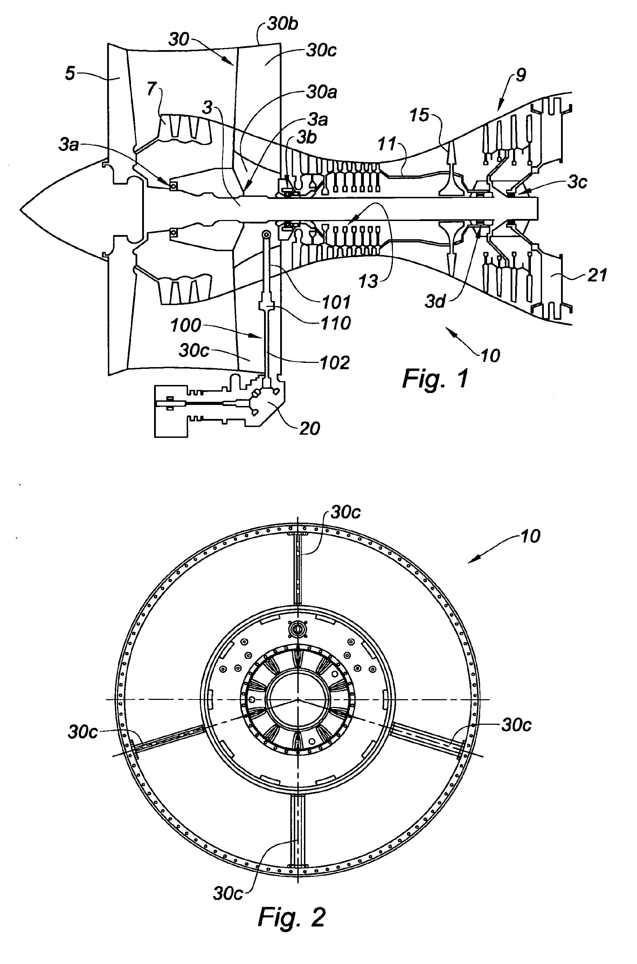

Un turboréacteur 10 à double flux et double corps avec ses différents composants principaux est illustré schématiquement sur la figure 1. Il comprend un premier arbre 3 reliant, à gauche sur la figure, un rotor de soufflante 5 et les premiers étages 7 de compresseur à la turbine basse pression 9 ; l'ensemble forme le corps basse pression, BP. Coaxial au premier arbre, un deuxième arbre 11 en forme de tambour, relie les étages 13 haute pression du compresseur à la turbine 15 haute pression ; l'ensemble forme le corps haute pression HP avec la chambre de combustion (non représentée). L'arbre 3 est supporté, en amont, par les paliers 3a et 3a' montés sur le carter 30 que l'on désigne carter intermédiaire et, en aval, par le palier 3c monté sur le carter d'échappement 21. L'arbre HP est supporté ici par le palier 3b du carter intermédiaire 30 et à l'arrière de l'arbre 3 par l'intermédiaire du palier interarbre 3d.

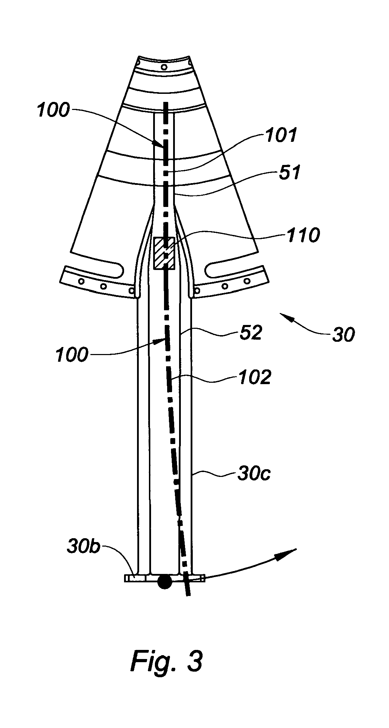

Le carter intermédiaire 30 est composé d'un moyeu 30a supportant les paliers 3a, 3a' et 3b, d'une virole 30b, extérieure, pourvue de moyens d'attache avant à l'aéronef et supportant le carter de soufflante, ainsi que de bras radiaux 30c, illustrés sur la figure 2, reliant le moyeu 30a à la virole 30b. Ce carter intermédiaire 30 est constitué au moins en partie d'une pièce venue de fonderie sur laquelle on a rapporté éventuellement des bras radiaux. Les machines auxiliaires, telles que générateurs et pompes à carburant ou à huile, sont montées sur un boîtier à engrenages 20, comme cela est connu, que l'on désigne dans le domaine par AGB. Ce boîtier est monté à l'extérieur sur le carter de soufflante à un emplacement qui en permet l'accès pour la maintenance. Les engrenages sont reliés mécaniquement à un arbre du moteur par l'intermédiaire d'un arbre d'entraînement radial 100, illustré schématiquement par la figure 3, qui est logé dans un bras radial 30c du carter intermédiaire 30.

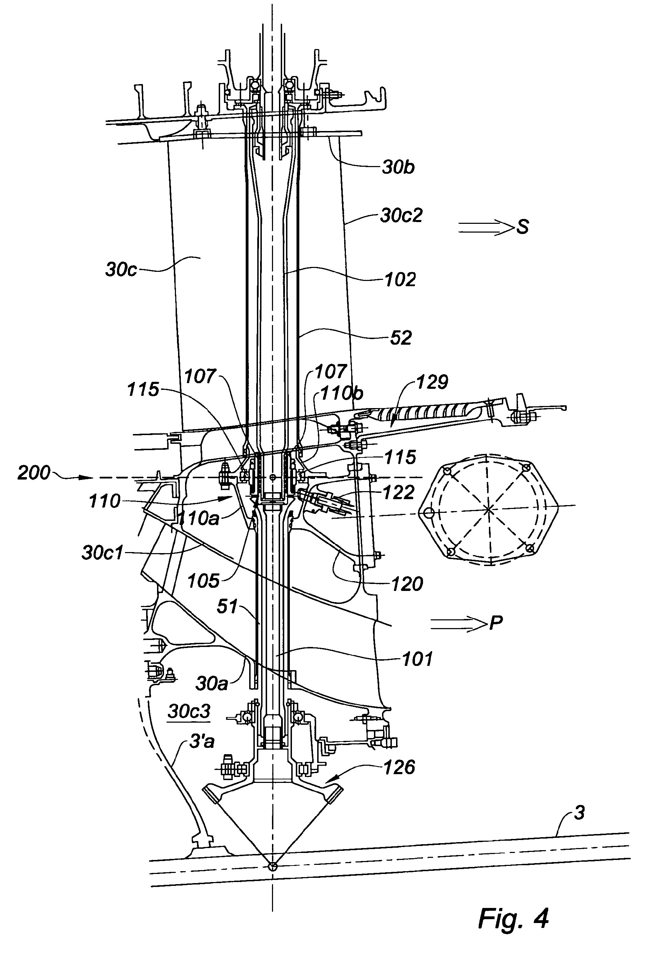

Le bras 30c est creux et est formé de trois parties radialement distinctes, comme l'illustre la figure 4 : 30c1, 30c2 et 30c3. La partie 30c3, profilée aérodynamiquement, traverse la veine du flux primaire P entre le compresseur BP et le compresseur HP (non représentés). La partie 30c3 du bras 30c est adjacente au moyeu 30a du carter intermédiaire 30. Le bras radial 30c comprend une partie 30c2 traversant la veine de flux secondaire S. La partie 30c2 est adjacente à la virole 30b. Le bras 30c comprend une partie 30c1 entre les deux premières. Cette partie délimite un secteur d'espace annulaire qui prolonge d'un côté le bec de séparation entre les flux primaire et secondaire, et de l'autre côté se prolonge lui-même par un espace annulaire 129 entre les deux flux.

En fonctionnement, un tel moteur aspire l'air par la soufflante qui le comprime en un flux primaire qui traverse les étages de compression, la chambre de combustion et les étages de turbine et un flux secondaire qui est éjecté dans l'atmosphère en bipassant la chambre de combustion. Les turbines entraînent les moyens de compression par l'intermédiaire des arbres BP et HP respectivement.

Comme illustré schématiquement sur les figures 3 à 6, un palier intermédiaire 110 permet de supporter l'arbre d'entraînement 100 entre les extrémités reliées respectivement au moyen de transmission mécanique avec l'arbre moteur 3 du turboréacteur 10 et au moyen de transmission mécanique avec le boîtier à engrenages 20 d'entraînement des accessoires.

Le palier 110 comprend un carter 110a, un carter 110b et une pluralité de roulements 115. Ces roulements 115 permettent à la fois de supporter l'arbre d'entraînement 100 et d'en favoriser la rotation. Ces roulements peuvent être de type roulements tonneaux connus de l'homme du métier.

Comme illustré sur les figures 3 à 6, l'arbre d'entraînement 100 comprend un premier élément d'arbre ou arbre primaire 101. Le premier élément d'arbre 101 est placé dans un fourreau primaire 51, relié au carter 110a du palier intermédiaire 110 et logé dans le bras radial 30c du carter intermédiaire 30. Ce premier élément d'arbre 101 est relié à un premier pignon conique à son extrémité radiale intérieure. Ce pignon est en prise avec un pignon conique solidaire du corps HP.

L'arbre d'entraînement 100 comprend également, comme illustré sur les figures 3 à 6, un second élément d'arbre ou arbre secondaire 102. Le second élément d'arbre 102 est placé dans un fourreau secondaire 52, relié par une extrémité à la virole 30b et par l'autre extrémité au carter 110b du palier intermédiaire 110, et logé dans le bras radial 30c du carter intermédiaire 30. Ce second élément d'arbre 102 est relié à un deuxième pignon à son extrémité radiale extérieure qui est en prise avec un arbre d'entrée du boîtier à engrenages 20.

Des joints appropriés assurent l'étanchéité entre le carter intermédiaire 30 et les deux fourreaux 51 et 52. De même des joints sont prévus aux deux autres extrémités des deux fourreaux 51 et 52. L'arbre 100 traverse la virole 30b du carter intermédiaire et son extrémité radiale extérieure est reliée mécaniquement, par une liaison à cannelures par exemple, à un couple de pignons coniques 126 illustré à la figure 4.

Comme décrit sur les figures 4 à 6, le premier élément d'arbre 101 et le second élément d'arbre 102 de l'arbre d'entraînement 100 sont liés par une liaison 105. La liaison 105 consiste en un emmanchement d'une extrémité du second élément d'arbre 102 dans une extrémité cylindrique creuse du premier élément d'arbre 101 et est réalisée par des cannelures 107 complémentaires disposées sur le premier élément d'arbre 101 et sur le second élément d'arbre 102. Cette pluralité de cannelures 107 complémentaires permettent ainsi une imbrication du second élément d'arbre 102 dans le premier élément d'arbre 101 tout en rendant le premier élément d'arbre 101 et le second élément d'arbre 102 solidaires en rotation.

A son extrémité inférieure, le premier élément d'arbre 101 est relié par une liaison à cannelures à un couple de pignons coniques 126 en prise avec un tourillon du corps HP (non représenté). L'extrémité radiale du second élément d'arbre 102 est reliée mécaniquement par un couple de pignons coniques (non représenté) à l'arbre d'entrée du boîtier à engrenages 20. Le mouvement de rotation du corps HP est ainsi transmis par le moyen de transmission constitué par le couple de pignons coniques 126 et l'arbre d'entraînement 100 à l'arbre d'entrée du boîtier à engrenages 20.

Dans le turboréacteur 10 selon l'invention, un même plan coupe transversalement la pluralité de cannelures 107 et la pluralité de roulements 115. Ainsi, l'articulation de la liaison 105 est réalisée au niveau de la zone de support formée par la pluralité de roulements 115.

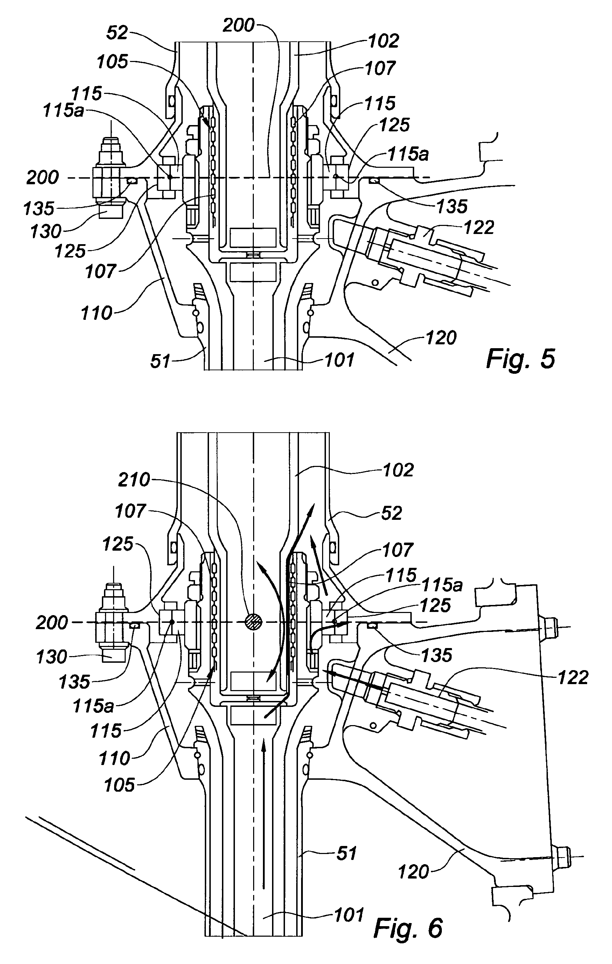

Dans la forme de réalisation du turboréacteur 10 selon l'invention, l'articulation de la liaison 105, générée par les efforts aérodynamiques subis par le turboréacteur 10 en fonctionnement, est réalisée, comme illustré sur la figure 6, autour d'un centre de rotulage 210.

La forme de réalisation décrite sur les figures 4 à 6 illustre le cas où un même plan coupe transversalement le centre de rotulage 210 et la pluralité de roulements 115, permettant ainsi de centrer le rotulage de la liaison 105 au niveau de la pluralité de roulements 115 et donc de réduire les jeux de l'arbre d'entraînement 100 dans le bras radial 30c.

De même, dans la forme de réalisation décrite sur les figures 4 à 6, un même plan 200 coupe transversalement le centre de rotulage 210 et le centre de chaque roulement de la pluralité de roulements 115. Ceci permet d'articuler le rotulage de la liaison 105 dans le plan médian transversal aux roulements 115, réduisant encore les jeux provoqués par exemple par le turboréacteur 10 en fonctionnement.

Dans la forme de réalisation illustrée, un même plan coupe transversalement le centre de chaque cannelure de la pluralité de cannelures 107 le centre de chaque roulement de la pluralité de roulements 115. Ceci correspond au cas particulier où le centre de rotulage est dans le plan transverse traversant le centre de chaque cannelure de la pluralité de cannelures 107.

Les cannelures 107 peuvent être de forme bombée pour améliorer le rotulage de la liaison 105.

Dans un tel arbre d'entraînement 100, une lubrification est nécessaire. Le besoin de cette lubrification en débit d'huile dépasse largement les moyens existants pour l'arbre d'entraînement des machines auxiliaires.

Le palier intermédiaire 110 peut ainsi comprendre un carter 120 permettant d'amener l'huile nécessaire à la lubrification de l'arbre d'entraînement 100 et des éléments de transmission mécanique par un circuit qui n'interfère pas avec les bras radiaux 30c du carter intermédiaire 30.

L'huile est amenée par un dispositif 122 spécialement dédié installé dans le carter 120, afin d'injecter directement l'huile au niveau du palier intermédiaire 110 pour en effectuer la lubrification.

Avec la configuration des cannelures 107 par rapport aux roulements 115 selon l'invention, l'huile peut être amenée directement au niveau des cannelures 107 et des roulements 115, améliorant l'efficacité des roulements 115 et donc le support, à travers la liaison 105, de l'arbre d'entraînement 100.

La piste extérieure 125 du roulement de palier intermédiaire 110 est centrée directement dans le carter 120, améliorant ainsi le positionnement de la ligne d'arbre en minimisant l'empilage des tolérances. Elle est fixée au boîtier 120 par une pluralité de boulons 130. Sa forme particulière permet de fermer l'enceinte huile formée par le carter 120, et participe à son étanchéité en comprimant le joint 135 installé dans la gorge du carter 120. Elle permet également le centrage et l'étanchéité du fourreau secondaire 52. Parallèlement, le boîtier 120 assure le centrage et l'étanchéité du fourreau primaire 51.

## Revendications

1. Turboréacteur (10) multi-flux, comprenant un carter intermédiaire (30) avec des bras radiaux (30c) et un arbre d'entraînement (100) d'un boîtier (20) à engrenages de machines auxiliaires du turboréacteur (10), ledit arbre d'entraînement (100) étant monté dans un bras radial (30c) du carter intermédiaire (30), ledit bras radial (30c) du carter intermédiaire (30) comprenant un palier intermédiaire (110) de support de l'arbre d'entraînement (100), ledit palier intermédiaire (110) comprenant une pluralité de roulements (115) de support de l'arbre d'entraînement (100), l'arbre d'entraînement (100) comprenant un premier élément d'arbre (101), relié à une extrémité à un moyen de transmission mécanique avec un arbre moteur du turboréacteur (10), et un second élément d'arbre (102), relié à une extrémité à un moyen de transmission mécanique avec ledit boîtier (20), le premier élément d'arbre (101) et le second élément d'arbre (102) étant liés par une liaison (105) consistant en un emmanchement d'une extrémité du second élément d'arbre (102) dans une extrémité cylindrique creuse du premier élément d'arbre (101) et étant réalisée par une pluralité de cannelures (107) complémentaires disposées sur le premier élément d'arbre (101) et sur le second élément d'arbre (102), le turboréacteur (10) étant **caractérisé par le fait qu'**un même plan coupe transversalement la pluralité de cannelures (107) et la pluralité de roulements (115).

2. Turboréacteur (10) selon la revendication 1, dans lequel le premier élément d'arbre (101) et le second élément d'arbre (102) de l'arbre d'entraînement (100) sont articulés autour d'un centre de rotulage (210) et dans lequel un même plan coupe transversalement ledit centre de rotulage (210) et la pluralité de roulements (115).

3. Turboréacteur (10) selon la revendication 2, dans lequel un même plan (200) coupe transversalement le centre de rotulage (210) et le centre de chaque roulement de la pluralité de roulements (115).

4. Turboréacteur (10) selon l'une des revendications précédentes, dans lequel un même plan (200) coupe transversalement le centre de chaque cannelure de la pluralité de cannelures (107) et le centre de chaque roulement de la pluralité de roulements (115).

5. Turboréacteur (10) selon l'une des revendications précédentes, dans lequel les cannelures de la pluralité de cannelures (107) sont bombées.

6. Turboréacteur (10) selon l'une des revendications précédentes, dans lequel le premier élément d'arbre (101) de l'arbre d'entraînement (100) est logé dans un premier fourreau (51) et le second élément d'arbre (102) de l'arbre d'entraînement (100) est logé dans un second fourreau (52).

7. Turboréacteur (10) selon l'une des revendications précédentes, dont ledit palier intermédiaire (110) est logé dans un espace du bras radial (30c) formant séparation du flux primaire d'avec le flux secondaire.

8. Turboréacteur (10) selon l'une des revendications précédentes, ledit turboréacteur (10) comprenant en outre un dispositif (122) d'injection d'huile de lubrification, ledit dispositif (122) étant agencé pour injecter de l'huile de lubrification au niveau d'un plan traversant transversalement la pluralité de cannelures (107) et la pluralité de roulements (115).

9. Turboréacteur (10) selon l'une des revendications précédentes, ledit turboréacteur (10) comprenant en outre une piste extérieure (125) du roulement de palier intermédiaire (110) centrée dans le carter (120).

## Patentansprüche

1. Mehrstrom-Turbinenstrahltriebwerk (10), das ein Zwischengehäuse (30) mit radialen Armen (30c) und eine Treibwelle (100) eines Gehäuses (20) mit Rädergetrieben von Hilfsmaschinen des Turbinenstrahltriebwerks (10) aufweist, wobei die Treibwelle (100) in einem radialen Arm (30c) des Zwischengehäuses (30) montiert ist, wobei der radiale Arm (30c) des Zwischengehäuses (30) ein Zwischenlager (110) zum Stützen der Treibwelle (100) aufweist, wobei das Zwischenlager (110) eine Mehrzahl von Wälzlagern (115) zum Stützen der Treibwelle (100) aufweist, wobei die Treibwelle (100) ein erstes Wellenelement (101) aufweist, das an einem Ende mit einem mechanischen Übertragungsmittel mit einer Antriebswelle des Turbinenstrahltriebwerks (10) verbunden ist, und ein zweites Wellenelement (102), das an einem Ende mit einem mechanischen Übertragungsmittel mit dem Gehäuse (20) verbunden ist, wobei das erste Wellenelement (101) und das zweite Wellenelement (102) durch eine Verbindung (105) verbunden sind, die aus einer Aufschrumpfung eines Endes des zweiten Wellenelements (102) in einem hohlen zylindrischen Ende des ersten Wellenelements (101) besteht und durch eine Mehrzahl komplementärer Nuten (107) hergestellt ist, die auf dem ersten Wellenelement (101) und auf dem zweiten Wellenelement (102) angeordnet ist, wobei das Turbinenstrahltriebwerk (10) **dadurch gekennzeichnet** ist, dass ein und dieselbe Ebene quer die Mehrzahl von Nuten (107) und die Mehrzahl von Wälzlagern (115) schneidet.

2. Turbinenstrahltriebwerk (10) nach Anspruch 1, bei dem das erste Wellenelement (101) und das zweite Wellenelement (102) der Treibwelle (100) um ein Drehzentrum (210) angelenkt sind, und bei dem ein und dieselbe Ebene quer durch das Drehzentrum (210) und die Mehrzahl von Wälzlagern (115) schneidet.

3. Turbinenstrahltriebwerk (10) nach Anspruch 2, bei dem ein und dieselbe Ebene (200) quer durch das Drehzentrum (210) und die Mitte jedes Wälzlagers der Mehrzahl von Wälzlagern (115) schneidet.

4. Turbinenstrahltriebwerk (10) nach einem der vorhergehenden Ansprüche, bei dem ein und dieselbe Ebene (200) quer durch die Mitte jeder Nut der Mehrzahl von Nuten (107) und die Mitte jedes Wälzlagers der Mehrzahl von Wälzlagern (115) schneidet.

5. Turbinenstrahltriebwerk (10) nach einem der vorhergehenden Ansprüche, bei dem die Nuten der Mehrzahl von Nuten (107) gewölbt sind.

6. Turbinenstrahltriebwerk (10) nach einem der vorhergehenden Ansprüche, bei dem das erste Wellenelement (101) der Treibwelle (100) in einer ersten Hülse (51) untergebracht ist und das zweite Wellenelement (102) der Treibwelle (100) in einer zweiten Hülse (52) untergebracht ist.

7. Turbinenstrahltriebwerk (10) nach einem der vorhergehenden Ansprüche, dessen Zwischenlager (110) in einem Raum des radialen Arms (30c), der die Trennung des Primärstroms von den Sekundärstrom bildet, untergebracht ist.

8. Turbinenstrahltriebwerk (10) nach einem der vorhergehenden Ansprüche, wobei das Turbinenstrahltriebwerk (10) ferner eine Schmieröl-Einspritzvorrichtung (122) aufweist, wobei die Vorrichtung (122) eingerichtet ist, um Schmieröl im Bereich einer Ebene einzuspritzen, die die Mehrzahl von Nuten (107) und die Mehrzahl von Wälzlagern (115) quer durchquert.

9. Turbinenstrahltriebwerk (10) nach einem der vorhergehenden Ansprüche, wobei das Turbinenstrahltriebwerk (10) ferner eine äußere Laufspur (125) des Zwischenlagers (110) in dem Gehäuse (120) zentriert aufweist.

## Claims

1. Multi-flow turbojet engine (10), comprising an intermediate casing (30) having radial arms (30c) and a driveshaft (100) for a gearbox (20) for auxiliary machines of the turbojet engine (10), said driveshaft (100) being mounted in a radial arm (30c) of the intermediate casing (30), said radial arm (30c) of the intermediate casing (30) comprising an intermediate bearing (110) for supporting the driveshaft (100), said intermediate bearing (110) comprising a plurality of rolling bearings (115) for supporting the driveshaft (100), the driveshaft (100) comprising a first shaft element (101) which is connected at one end to a means for providing mechanical transmission to an engine shaft of the turbojet engine (10), and a second shaft element (102) which is connected at one end to a means for providing mechanical transmission to said box (20), the first shaft element (101) and the second shaft element (102) being linked by a connection (105) consisting in one end of the second shaft element (102) being fitted in a hollow cylindrical end of the first shaft element (101) and being provided by a plurality of complementary splines (107) arranged on the first shaft element (101) and on the second shaft element (102), the turbojet engine (10) being **characterised in that** a single plane transversely passes through the plurality of splines (107) and the plurality of rolling bearings (115).

2. Turbojet engine (10) according to claim 1, wherein the first shaft element (101) and the second shaft element (102) of the driveshaft (100) are articulated about a centre of swivelling (210) and wherein a single plane transversely passes through said centre of swivelling (210) and the plurality of rolling bearings (115).

3. Turbojet engine (10) according to claim 2, wherein a single plane (200) transversely passes through the centre of swivelling (210) and the centre of each rolling bearing of the plurality of rolling bearings (115).

4. Turbojet engine (10) according to any of the preceding claims, wherein a single plane (200) transversely passes through the centre of each spline of the plurality of splines (107) and the centre of each rolling bearing of the plurality of rolling bearings (115).

5. Turbojet engine (10) according to any of the preceding claims, wherein the splines of the plurality of splines (107) are rounded.

6. Turbojet engine (10) according to any of the preceding claims, wherein the first shaft element (101) of the driveshaft (100) is accommodated in a first sleeve (51) and the second shaft element (102) of the drive shaft (100) is accommodated in a second sleeve (52).

7. Turbojet engine (10) according to any of the preceding claims, wherein the intermediate bearing (110) is accommodated in a space of the radial arm (30c) separating the primary flow and the secondary flow.

8. Turbojet engine (10) according to any of the preceding claims, said turbojet engine (10) further comprising a lubrication-oil injection device (122), said device (122) being arranged to inject lubrication oil in the region of a plane transversely passing through the plurality of splines (107) and the plurality of rolling bearings (115).

9. Turbojet engine (10) according to any of the preceding claims, said turbojet engine (10) further comprising an outer race (125) for the intermediate bearing (110), which race is centred in the casing (120).
